(19) **Europäisches Patentamt**
European Patent Office
Office européen des brevets

(11) **EP 1 802 904 B1**

(12) **EUROPÄISCHE PATENTSCHRIFT**

(45) Veröffentlichungstag und Bekanntmachung des Hinweises auf die Patenterteilung:
**20.04.2011 Patentblatt 2011/16**

(21) Anmeldenummer: **05798647.3**

(22) Anmeldetag: **14.10.2005**

(51) Int Cl.:
***F16K 39/02*** (2006.01)

(86) Internationale Anmeldenummer:
**PCT/EP2005/011081**

(87) Internationale Veröffentlichungsnummer:
**WO 2006/045458 (04.05.2006 Gazette 2006/18)**

(54) **DRUCKBALANZIERTES REGELVENTIL UND ENTSPANNUNGSSTATION MIT EINER GASWEGE-UMSCHALTEINRICHTUNG**

PRESSURE-EQUILIBRATED REGULATION VALVE AND PRESSURE RELIEF STATION WITH A GAS PATH SWITCHING DEVICE

SOUPAPE DE REGULATION EQUILIBREE EN PRESSION ET STATION DE DETENTE POURVUE D'UN DISPOSITIF DE CHANGEMENT DE GAZ

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.10.2004 DE 102004051736**

(43) Veröffentlichungstag der Anmeldung:
**04.07.2007 Patentblatt 2007/27**

(73) Patentinhaber: **Messer Cutting & Welding GmbH 64823 Gross-Umstadt (DE)**

(72) Erfinder:
• **ELSNER, Peter 65029 Frankfurt (DE)**
• **ELGERT, Uwe 60388 Frankfurt (DE)**

(74) Vertreter: **Staudt, Armin Walter Patentanwalt Auf der Mauer 8 63674 Altenstadt (DE)**

(56) Entgegenhaltungen:
**EP-A- 1 184 617     DE-A1- 4 334 243**

EP 1 802 904 B1

## Beschreibung

Die vorliegende Erfindung betrifft ein druckbalanciertes Regelventil in Form eines mit dem Vordruck schließenden Kolbenreglers.

Weiterhin betrifft die Erfindung eine Entspannungsstation mit einem Gaswege-Umschalter, zur wechselwe isen Entnahme gasförmige Medienströme aus Druckgasquellen, wobei bei die Umschaltung von dem einen auf einen anderen Medienstrom durch den Mediendruck gesteuert unter Einsatz zweier Regelventile erfolgt, deren Gasabflussräume fluidisch miteinander verbunden sind.

Gase für den industriellen, medizinischen und privaten Bedarf werden häufig in Druckgasflaschen aus Stahl, Aluminium oder Kompositwerkstoff bereitgestellt. Die Gase stehen in den Druckbehältern unter hohem Druck. Beispielsweise setzt sich bei Druckgasflaschen mehr und mehr ein Fülldruck von 300 bar durch.

Für die Entnahme von Gas aus einem Druckbehälter ist eine Einrichtung zur Druckreduzierung erforderlich. Gebräuchliche Bauarten für Regelventil sind Membranventile und Kolbenventile. Ein besonderes Augenmerk liegt hierbei einerseits auf der Sicherheit, andererseits auf der Regelempfindlichkeit, insbesondere bei Anwendungen, bei denen es auf einen konstanten Arbeitsdruck des Gases ankommt, wie beispielsweise bei der Sauerstoffversorgung in Krankenhäusern, bei Analyse- und Messanwend ungen oder beim Einsatz druckempfindlicher Apparaturen. Trotz der mit der Gasentnahme einhergehenden Abnahme des Fülld rucks im Druckbehälter (Vordruck) soll an der Entnahmestelle ein möglichst konstanter Arbeitsdruck bereitstehen (Hinterdruck). Wegen ihrer besseren Regeleigenschaften ist diese Anforderung mit Membranreglern leichter zu erfüllen als mit Kolbenreglern. Andererseits sind Membranregler konstruktiv bedingt für den Einsatz bei hohen Hinterdrücken nicht immer geeignet.

Aus diesem Grund wurde versucht, die Regeleigenschaften von Kolbenreglern zu verbessern. Eine bekannte Maßnahme besteht darin, eine mehrstufige Druckminderung vorzusehen. Ein derartiger Kolbenregler ist beispielsweise in der DE 198 52 471 beschrieben. Der dort vorgeschlagene Kolbenregler umfasst zwei Regelstufen mit jeweils fallender Charakteristik, wovon die eine Regelstufe für den Hochdruckbereich (zum Beispiel von 300 auf 10 bar) und die zweite Regelstufe für den Niederdruckbereich (zum Beispiel von 10 auf 2,5 bar) ausgelegt ist.

Die mehrstufige Ausführung eines Kolbenreglers ist jedoch konstruktiv aufwändig, daher kostspielig, und sie führt zu einer relativ großen Bauhöhe des Regelventils.

Eine andere Maßnahme zur Verbesserung der Druckkennlinien sowohl von Membran- als auch von Kolbenreglern besteht in der Schaffung eines Druckausgleichs, indem ein beiderseits auf das zu verstellende Ventilteil (Membran, Ventilkegel) einwirkender Druck erzeugt wird, so dass für die Öffnungs- und Schließbewegung des Ventilteils nur geringe Verstellkräfte notwendig sind.

Ein druckbalanciertes Regelventil dieser Art ist in der DE 298 23 995 U1 beschreiben. Das bekannte Regelventil umfasst einen Ventilkörper, der in einem Strömungskanal ortsfest angeordnet ist, und dessen Außenseite von einer verschiebbar gelagerten Hülse umgeben ist, die einen Teil des Strömungskanals bildet. Das Regelventil wird durch Verschieben der Hülse geöffnet und geschlossen. Zur Herstellung einer Druckbalance ist ein Druckausgleichsraum vorgesehen.

Das bekannte druckbalanciertes Regelventil ist konstruktiv besonders aufwändig und erfordert insbesondere eine tropfenfömige Ausbildung des Ventilkörpers.

Aus der DE 44 38 462 C1 ist Hochdruck-Absperrventil bekannt, bei dem das Öffnen oder Schließen durch einen Hilfsdruck erleichtert wird. Das Absperrventil weist eine Stopfbüchse auf, in der ein Ventilkegel zwischen einer Geschlossenstellung bei Anlage auf einem Ventilsitz und einer gegen die Kraft einer Schließfeder erreichbaren Offenstellung in axialer Richtung verschiebbar gelagert ist. Die Stopfbüchse ist in einen Körper eingesetzt, in welchem der Ventilsitz, ein Gas-Zuflussraum vor dem Ventilsitz und ein Gas-Abflussraum hinter dem Ventilsitz ausgebildet sind, so dass der Gas-Zuflussraum und der Gas-Abflussraum in Geschlossenstellung durch den Ventilkegel voneinander getrennt sind. Auf die dem Ventilsitz zugewandte Unterseite des Ventilkegels wirkt der im Gas-Zuflussraum herrschende Vordruck öffnend. Um einen in schließender Richtung wirkenden Gegendruck etwa gleicher Größe zu schaffen, ist in der Stopfbüchse eine gegenüber der Umgebung abgedichtete Druckhilfskammer vorgesehen, in die hinein sich der Ventilkegel mit seinem anderen, dem Ventilsitz abgewandten, oberen Ende erstreckt. Der Ventilkegel weist eine konzentrische Bohrung vom Gas-Zuflussraum in die Druckhilfskammer auf. Dies ermöglicht einen Druckausgleich zwischen Gas-Zuflussraum und Druckhilfskammer, so dass der Vordruck auch in schließender Richtung auf den Ventilkegel einwirkt. Die am Ventilkegel wirkenden Druckkräfte heben sich dadurch teilweise auf, was das Öffnen und Schließen des Ventils vereinfacht.

Um eine kontinuierliche Gasversorgung unter Einsatz von Druckbehältern, wie Druckgasflaschen oder Gebinden mehrerer miteinander verbundener Druckgasflaschen, zu gewährleisten, umfassen moderne Entspannungsstationen UmschaltEinrichtungen, mittels denen die Gasentnahme vor der vollständigen Entleerung des einen Druckbehälters auf einen anderen, noch gefüllten Druckbehälter, umgeschaltet werden. Die Umschalteinrichtung umfasst in der Regel ein Regelventil, wobei hierfür wegen ihres besseren Regelverhaltens bisher Membranregler eingesetzt werden. Bei Anwendungen mit hohen Hinterdrücken ist jedoch eine große Membranfläche und damit einhergehend eine entsprechend große Stellfeder mit hoher Federkonstante erforderlich. Die Umschaltung des Gasweges erfolgt durch Umlegen eines Hebels in einer Verbindungsleitung zwischen den beiden Druckbehältern gegen die Kraft der Stellfeder, was bei den Membranreglern einen hohen Kraftaufwand erfordert.

Aus der EP 1 184 617 A ist ein druckbalanciertes Regelventil in Form eines mit dem Vordruck schließenden Membranreglers bekannt. Vor dem Membrankörper ist ein Gas-Zuflussraum vorgesehen, der mit einer Druckgasquelle verbunden ist und der in Geschlossenstellung von einem Gas-Abflussraum hinter dem Membrankörper getrennt ist. Ein auf die Membran einwirkender Kolben ragt mit seinem oberen Ende in einen Druckausgleichsraum, in dem ein Vordruck anliegt. Der Druckausgleichsraum ist in einer Verschlussschraube ausgebildet und von ihm aus reicht eine Verbindungsleitung in einen Gas-Abflussraum. Die Verbindungsleitung umfasst einen Ringraum, der im Grundkörper ausgebildet ist und der zwischen einer oberen Dichteinheit und einer unteren Dichteinheit ausgebildet ist. Die Dichteinheiten bestehen aus Dichtringen, die in Ringnuten der Verschlussschraube einliegen. Der Gas-Zuflussraum und der Gas-Abflussraum sind ausschließlich über das Ventil verbunden.

Der vorliegenden Erfindung liegt daher die Aufgabe zugrunde, ein Regelventil in Form eines Kolbenreglers mit verbesserten Regeleigenschaften bereitzustellen, der sich außerdem durch eine geringe Bauhöhe, einen geringen Preis und hohen Bedienungskomfort auszeichnet.

Außerdem geht es bei der Erfindung darum, die Bedienung eines Gaswege-Umschalters einer Entspannungsstation zu vereinfachen.

Hinsichtlich des Regelventils wird diese Aufgabe erfindungsgemäß durch ein druckbalanciertes Regelventil in Form eines mit dem Vordruck schließenden Kolbenreglers gelöst, umfassend ein Gehäuse mit einem Ventilsitz für einen Ventilkegel, der zwischen einer Geschlossenstellung bei Anlage auf dem Ventilsitz und einer mit dem Hinterdruck und gegen die Kraft einer Stellfeder erreichbaren Offenstellung in axialer Richtung verschiebbar gelagert ist, mit einem vor dem Ventilsitz vorgesehenen Gas-Zuflussraum, der mit einer Druckgasquelle verbunden ist und der in Geschlossenstellung mittels dem auf dem Ventilsitz anliegenden Ventilkegel von einem Gas-Abflussraum hinter dem Ventilsitz getrennt ist, und mit einem über eine Druckausgleichsleitung mit dem Gas-Abflussraum fluidisch verbundenen, abgedichteten Druckausgleichsraum, in den sich der Ventilkegel mit einem Ende erstreckt, auf das der Hinterdruck in Schließrichtung einwirkt, wobei sich das auf den Ventilkolben einwirkende, untere Ende des Ventilkegels in eine Druckausgleichskammer erstreckt, die über einen Druckausgleichskanal mit dem Gas-Abflussraum verbunden ist.

Beim erfindungsgemäßen Regelventil erstreckt sich der Ventilkegel in einen Druckausgleichsraum, in dem infolge seiner fluidischen Verbindung derselbe oder ein ähnlicher Druck herrscht wie im Gas-Abflussraum. Dieser Druck wird hier auch als "Hinterdruck", und der im Gas-Zuflussraum anliegende Druck der Druckgasquelle als "Vordruck" bezeichnet. Der Hinterdruck im Druckausgleichsraum wirkt auf den Ventilkegel in Schließrichtung. Demgegenüber wirkt der Hinterdruck bei dem gegen den Vordruck öffnenden Kolbenregler im Bereich des Ventilsitzes gegen den Vordruck, also in Öffnungsrichtung. Die Wirkungsrichtungen der auf den Ventilkegel wirkenden Druckkräfte sind somit entgegengesetzt, so dass sie sich im Fall gleich großer Wirkungsquerschnitte gegenseitig aufheben.

Der Ventilkegel erstreckt sich durch den gesamten Gas-Zuflussraum hindurch einerseits in den oberen Druckausgleichsraum, andererseits durch den Ventilsitz hindurch in den Gas-Abflussraum. Der Gas-Zuflussraum ist über eine am Außenmantels des Ventilkegels angreifende Druckausgleichsraum-Dichtung sowohl vom Druckausgleichsraum getrennt, als auch - über den Ventilsitz - vom Gas-Abflussraum. Auf die Dichteinheit wirkt der Vordruck in öffnender Richtung, auf den Ventilsitz in schließender Richtung, so dass sich auch die Wirkungen des Vordruckes auf den Ventilkegel rechnerisch gegenseitig aufheben, sofern die Dichtungsquerschnitte von Druckausgleichsraum-Dichtung und Ventilsitz (im Idealfall) gleich groß sind.

Dadurch gelingt es, die Abhängigkeit des Hinterdrucks vom Vordruck zu beseitigen oder zumindest zu vermindern, wie die dies auch die folgenden Gleichungen verdeutlichen.

Bei der Gasentnahme aus einer Druckgasquelle nach dem Stand der Technik stellt sich zwischen öffnend und schließend wirkenden Kräften das folgende Gleichgewicht ein, wobei hier von einem mit dem Vordruck schließende n Ventil ausgegangen wird:

$$P_h \times A_k + F_{schl} + P_v \times A_v = F_{st} + P_h \times A_v \qquad (1),$$

wobei:

$P_h =$ Hinterdruck,

$A_k =$ wirksame Kolbenfläche (wirksame Membranfläche)

$F_{schl} =$ Schließfederkraft (sofern ein in Schließrichtung wirken der Kraftspeicher vorhanden ist)

$P_v =$ Vordruck

(fortgesetzt)

A$_v$ =     Ventilsitzfläche

F$_{st}$ =   Stellfederkraft (sofern ein in Öffnungsrichtung wirken der Kraftspeicher vorhanden ist)

Die wirksame Kolbenfläche A$_k$ ist die Querschnittsfläche des Kolbens, auf die die jeweiligen Druckkräfte (Hinterdruck, Vordruck) einwirken.

Daraus berechnet sich der sich im Gleichgewicht einstellende Hinterdruck wie folgt:

$$P_h \quad = \quad \frac{F_{st} - F_{schl} - P_h \times A_v}{A_k - Av} \qquad (2)$$

Gleichung (2) zeigt, dass der sich einstellende Hinterdruck abgesehen von den Kräften der auf den Ventilkegel einwirkenden, konstanten Kraftspeichern (wie beispielsweise Stellfedern) vom herrschenden Vordruck abhängt. Bei sich leerendem Druckgasbehälter und damit abnehmendem Vordruck steigt der Hinterdruck (steigende Charakteristik). Diese Abhängigkeit der Hinterdrucks führt dazu, dass der Druckgasbehälter bei druckempfindlichen Anwendungen bereits deutlich vor seiner vollständigen Entleerung ausgetauscht werden muss, wobei der Restdruck sich nicht nur als Materialverlust niederschlägt, sondern zudem die Entsorgung und Wiederaufbereitung des Druckgasbehälters erschwert.

Im Gegensatz dazu ergeben sich infolge der oben erläuterten Druckbalancierung beim erfindungsgemäßen Regelventil folgende Gleichgewichtseinstellungen:

$$P_h \times A_k + F_{schl} \qquad (3)$$

Die mit markierten Kraftkomponenten heben sich beim erfindungsgemäßen Regelventil im Idealfall gegenseitig vollkommen auf, so dass für den sich einstellenden Hinterdruck folgende Abhängigkeit verbleibt:

$$P_h \quad = \quad \frac{F_{st} - F_{schl}}{A_k} \qquad (4)$$

Der sich im Gas-Abflussraum einstellende Hinterdruck hängt somit nur von den (konstanten) Stellkräften und von der wirksamen Kolbenfläche ab; die Vordruckabhängigkeit des Hinterdrucks ist beseitigt. Infolge dieser im Idealfall vollkommenen - in der Praxis zumindest weitgehenden - Unabhängigkeit vom Vordruck zeigt der erfindungsgemäße Regelventil ein hervorragendes Regelverhalten bei sich verändernden Vordrücken, das bisher bei nur mit Membranreglern oder mit mehrstufigen Reglern zu erreichen war. Gegenüber mehrstufigen Reglern mit vergleichbarem Regelverhalten zeichnet sich der erfindungsgemäße Kolbenregler durch eine kompaktere Bauform und geringere Fertigungskosten aus.

Im Hinblick auf Bedienungskomfort und Betriebssicherheit des erfindungsgemäßen Regelventils erstreckt sich das auf den Ventilkolben einwirkende, untere Ende des Ventilkegels in eine Druckausgleichskammer, die über einen Druckausgleichskanal mit dem Gas-Abflussraum verbunden ist.

In der Druckausgleichskammer stellt sich der im Gas-Abflussraum herrschende Hinterdruck über den Druckausgleichskanal mit einer gewissen Verzögerung ein. Dadurch werden starke Druckschwankungen - etwa infolge von Fehlbedienungen - eliminiert und Beschädigungen des Regelventils vermieden.

Als besonders vorteilhaft hat es sich erwiesen, wenn das Gehäuse einen Grundkörper mit einer Durchgangsbohrung und eine mit dem Grundkörper verbundene und mit einer Aufnahme für die Stellfeder versehene Verschlussschraube umfasst, die in die Durchgangsbohrung eingesetzt und um deren Mittelachse drehbar gelagert ist, und in welcher der Druckausgleichsraum ausgebildet ist.

Der Druckausgleichsraum ist hierbei in der Verschlussschraube vorgesehen, die auch zur Einstellung des gewünschten Hinterdruckes dient. Dadurch ergibt sich eine besonders kompakte Bauform.

Bei einer besonders bevorzugten Ausführungsform des erfindungsgemäßen Kolbenreglers umfasst die Druckausgleichsleitung einen um die Verschlussschraube umlaufenden Ringraum, in den ein mit dem Gas-Abflussraum verbundener erster Druckkanal und ein mit dem Druckausgleichsraum verbundener zweiter Druckkanal münden.

Der Ringraum erlaubt eine Ausbildung der Druckausgleichsleitu ngen innerhalb des Gehäuses und ermöglicht dadurch eine besonders kompakte und benutzerfreundliche Bauform des Regelventils. Der Ringraum ist Teil der Druckausgleichsleitung und demnach nach Außen abgedichtet. Er ist einerseits mit dem Druckausgleichsraum fluidisch verbunden und andererseits mit dem Gas-Abflussraum. Der mit dem Gas-Abflussraum verbundene erste Druckkanal verläuft mindestens teilweise innerhalb des Grundkörpers, und der mit dem Druckausgleichsraum verbundene zweite Druckkanal verläuft durch den Körper der Verschlussschraube. Es sind jeweils ein erster und ein zweiter Druckkanal oder mehrere erste oder zweite Druckkanäle vorgesehen.

In einer ersten bevorzugten Ausführungsvariante ist der Ringraum im Grundkörper ausgebildet.

Diese Ausführungsvariante ist fertigungstechnisch einfacher zu realisieren als die zweite, gleichermaßen bevorzugte Ausführungsvariante, bei welcher der Ringraum in der Verschlussschraube ausgebildet ist.

Der Ringraum ist nach Außen abgedichtet. Eine Ausführungsform diese Abdichtung hat sich besonders bewährt, bei der zwischen der Innenwandung der Durchgangsbohrung und der Verschlussschraube eine obere Dichteinheit und eine untere Dichteinheit vorgesehen sind, wobei der Ringraum zwischen der oberen Dichteinheit und der unteren Dichteinheit verläuft.

Hierbei ist der Spalt zwischen der Durchgangsbohrung des Grundkörpers und der Verschlussschraube mittels zweier Dichteinheiten abgedichtet, wobei der Ringraum zwischen den beiden Dichteinheiten angeordnet ist.

Aus Gründen der Betriebssicherheit des Reglers sind die obere Dichteinheit und die untere Dichteinheit jeweils als Dichtringe ausbildet, die bevorzugt in Ringnuten der Verschlussschraube eingelassen sind.

Es hat sich außerdem als vorteilhaft erwiesen, wenn die Abdichtung des Druckausgleichsraums einen Dichtring umfasst, der am Ende des Ventilkegels in einem Dichtungsbereich dichtend anliegt, wobei der Ventilkegel in dem Dichtungsbereich einen Abdichtdurchmesser aufweist, der vom Durchmesser des Ventilsitzes um maximal 15 % abweicht.

Es hat sich überraschend gezeigt, dass sich auch dann ein sehr gutes Regelverhalten des erfindungsgemäßen Regelventils ergibt, wenn die Dichtungsquerschnitte im Bereich des Druckausgleichsraums und des Ventilsitzes nicht genau gleich groß sind. Die Dichtungsquerschnitte lassen sich leicht empirisch optimieren, wobei die besten Ergebnisse erzielt werden, wenn der Unterschied der Ventilkegel-Durchmesser im Dichtungsbereich und im Bereich des Ventilsitzes um etwa 10 %, maximal um 15 % voneinander abweichen.

Eine weitere Verbesserung des erfindungsgemäßen Regelventils wird erreicht, wenn der Druckausgleichsraum in einem in die Verschlussschraube austauschbar eingesetzten Hochdruckregeleinsatz ausgebildet ist.

Der Hochdruckregeleinsatz ist hierbei als vorgefertigtes Einsatzteil ausgebildet, das in eine passende Aufnahme der Verschlussschraube eingesetzt wird. Identische Einsatzteile können für eine Vielzahl unterschiedlicher Regelventil-Typen verwendet werden, wodurch sich der Fertigungsaufwand und die Kosten für die Lagerhaltung verringern. Insbesondere ist der Hochdruckregeleinsatz auch für ein druckbalanciertes Regelventil in Form eines mit dem Vordruck schließenden Membranreglers einsetzbar.

Im Zusammenhang mit dem sich in die Druckausgleichkammer erstreckenden unteren Ende des Ventilkegels hat es sich auch als günstig erwiesen, wenn das untere Ende des Ventilkegels in einer Gleitbuchse geführt wird.

Das untere Ende des Ventilkegels ragt durch Gleitbuches geführt in die Druckausgleichskammer hinein. Durch Einsatz der Gleitbuchse werden Rundlauftoleranzen bei der Fertigung kompensiert sowie Reibungskräfte und Schwingungen bei der Bewegung des Ventilkegels vermindert.

Bei einer besonders bevorzugten Ausführungsform des erfindungsgemäßen Regelventils sind der Gas-Zuflussraum und der Gas-Abflussraum ausschließlich über das Ventil fluidisch verbindbar.

Es ist bekannt, konstruktive Maßnahmen vorzusehen, die bei niedrigem Vordruck die Herstellung einer fluidische Verbindung zwischen Gas-Zuflussraum und Gas-Abflussraum bewirken. Dadurch kommt es jedoch zwangsläufig zu Druckschwankungen im Bereich des Hinterdrucks. Erfindungsgemäß wird deshalb unabhängig vom herrschenden Vordruck jede zusätzliche Verbindung zwischen Gas-Zuflussraum und Gas-Abflussraum vermieden, so dass der Ausgangsdruck auch bei niedrigem Vordruck konstant bleibt. Hinsichtlich der Entspannungsstation wird die oben genannte Aufgabe ausgehend von der eingangs beschriebenen Entspannungsstation erfindungsgemäß dadurch gelöst, dass die Regelventile in Form von Kolbenreglern gemäß der Erfindung ausgebildet sind und dass eine Umschalteinrichtung vorgesehen ist, umfassend einen Hebel, der mit einem Kegelradgetriebe in Wirkverbindung steht, das über jeweils eine Spindel auf die Stellfeder des Kolbenreglers einwirkt.

Der erfindungsgemäße Kolbenregler zeichnet sich zum einen durch ein hervorragendes Regelverhalten aus, zum anderen ist er für einen Einsatz bei hohen Hinterdrücken geeignet. In Verbindung mit einer Entspannungsstation mit einer Gaswege-Umschalteinrichtung für die Umschaltung einer Gasversorgung von einer Druckgasquelle auf eine andere ergibt sich der Vorteil, , dass die mit dem Ventilkegel zusammenwirkende Stellfeder wegen der - im Vergleich zu einer Membran - kleineren Kolbenstirnfläche entsprechend klein un d mit niedriger Federkonstante ausgelegt sein. Die kleine Federkonstante erleichtert das Umlegen des Umschalthebels.

Infolge des geringeren Kraftaufwand ist im Vergleich zur bekannten Entspannungsstation ein kürzer Krafthebel zum Umlegen des Umschalthebels erforderlich..

Daher zeichnet sich eine besonders bevorzugte Ausführungsform der erfindungsgemäßen Entspannungsstation dadurch aus, dass die Länge des Hebels weniger als 120 mm, vorzugsweise weniger als 100 mm beträgt(bezogen auf die Hebel-Drehachse).

Dadurch ergibt sich ein besonders kompakter Gaswege-Umschalter und eine geringe Bauhöhe der unter Einsatz des erfindungsgemäßen Regelventils hergestellten Entspannungsstation insgesamt.

Nachfolgend wird die Erfindung anhand eines Ausführungsbeispiels und einer Zeichnung näher erläutert. In der Zeichnung zeigen im einzelnen:

**Figur 1** eine Ansicht eines erfindungsgemäßen Druckminderers mit Vor- und Hinterdruckausgleich in einem Längsschnitt,

**Figur 2** eine Abwandlung des erfindungsgemäßen Druckminderers gemäß Figur 1 mit einem in die Ventilgehäuse eingesetzten Einsatzteil in ei- nem Ausschnitt,

**Figur 3** ein Diagramm mit einer Druck-Entspannungskurve des in Figur 1 dargestellten Druckminderers mit Vor- und Hinterdruckausgleich, und

**Figur 4** eine Ausführungsform der erfindungsgemäßen Entspannungsein- richtung, teilweise im Schnitt.

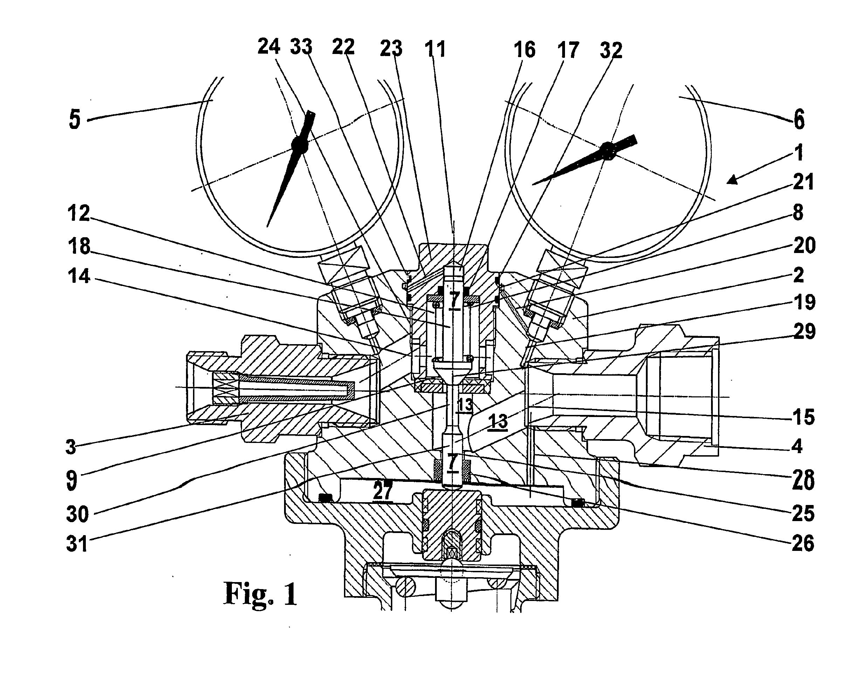

Der in **Figur 1** dargestellte Druckminderer 1 ist in der Bauform eines Kolbenreglers ausgeführt. Ein Gehäusegrundkörper 2 ist mit einem Verbindungsstück 3 zu einer Druckgasflasche mit einem Fülldruck bis 300 bar (in der Figur nicht dargestellt), mit einem weiteren Verbindungsstück 4 zu einem Verbraucher, mit einem Sicherheitsmanometer 5 zur Messung des Vordrucks (Flaschenfülldruck) und mit einem weiteren Manometer 6 zur Messung des Hinterdrucks verbunden.

In einer zentralen Durchgangsbohrung des Gehäusegrundkörpers 2 und mit diesem über ein Gewinde 24 verbunden, ist eine Verschlussschraube 23 drehbar eingesetzt, die eine Aufnahme für eine Schließfeder 8 aufweist. Mittels der Verschlussschraube 23 wird die auf den Ventilkegel 7 wirkende Schließkraft der Schließfeder 8 eingestellt. Der Ventilkegel 7 ist längs einer Mittelachse 11 in axialer Richtung zwischen einer Offenstellung und einer Geschlossenstellung bei Auflage auf einem Ventilsitz 9 bewegbar. Er öffnet gegen den Vordruck und gegen die Druckkraft der Schließfeder 8. In der Geschlossenstellung trennt der Ventilsitz 9 eine Gas-Einlasskammer 12 mit einer Öffnung 14 zum Verbindungsstück 3, und eine Gas-Auslasskammer 13 mit einer Öffnung 15 zum Verbindungsstück 4.

Das obere Ende des Ventilkegels 7 erstreckt sich durch die Gas-Einlasskammer 12 in einen Druckausgleichsraum 16. Dieser ist als Hohlraum in der Verschlussschraube 23 ausgebildet und gegenüber der Gas-Einlasskammer 12 mittels eines an der Mantelfläche des Ventilkegels 7 anliegenden Dichtrings 17 abgedichtet.

Im Druckausgleichsraum 16 liegt der in der Gas-Aus lasskammer 13 herrschende Hinterdruck an. Hierzu ist innerhalb des Gehäusegrundkörpers 2 ein Verbindungskanal (19, 20, 21, 22) zwischen der Gas-Auslasskammer 13 und dem Druckausgleichsraum 16 ausgebildet. Dieser reicht von der Bohrung 19 zum Manometer 6 über eine erste Druckausgleichsbohrung 20 in einen abgedichteten Ringraum 21zwischen dem Gehäusegrundkörper 2 und der Verschlussschraube 23, und von dort über eine zweite Druckausgleichsbo hrung 22 durch die Wandung der Verschlussschraube 23 in den Druckausgleichsraum 16. Der Ringraum 21 ist als Nut in der Wandung des Gehäusegrundkörper 2 ausgebildet und durch zwei Dichtringe 32, 33 oberhalb und unterhalb der Nut nach Außen abgedichtet.

Das untere Ende des Ventilkegels 7 erstreckt sich du rch die Gas-Einlasskammer 12 über eine im Gehäusegrundkörper 2 vorgesehene Führungsbohrung 25 und eine sich daran anschließende Gleitbuchse 26 in eine Druckausgleichskammer 27. In der Druckausgleichskammer 27 liegt ebenfalls Hinterdruck an. Hierzu ist im Geh äusegrundkörper 2 ein Verbindungskanal 28 zwischen der Gas-Auslasskammer 13 und der unteren Druckausgleichskammer 27 ausgebildet. Die Druckausgleichskammer 27 ist aus Sicherheitsgründen zum Abfedern starker Druckschwankungen vorgesehen.

Der Außendurchmesser des Ventilkegels 7 variiert über die Länge. Der obere Zylinderabschnitt 18 im Bereich der Anlage am Dichtring 17 hat einen Außendurchmesser von 6 mm. Der Schließkegel 29 mündet in einer Verengung 30 mit einem Außendurchmesser von 4 mm und erweitert sich zum unteren Ende wieder in einen unteren Zylinderabschnitt 31 mit einem Außendurchmesser von 6 mm, der in die Druckausgleichskammer 27 hineinragt. Der Öffnungsdurchmesser des Ventilsitzes 9 beträgt 6,6 mm. Der obere Zylinderabschnitt 18 bestimmt die wirksame obere Kolbenfläche für die Wirkung des in Schließrichtung wirkenden Hinterdrucks im Druckausgleichsraum 16, während der Öffnungsdurchmesser des Ventilsitzes 9 für die Wirkung des Hinterdrucks in öffnender Richtung entscheidend ist.

Der Ventilkegel 7 erstreckt sich somit durch den gesamten Gas-Zuflussraum 12 hindurch und in beiderseits jeweils in einem gegenüber dem Vordruck abgedichteten Räumen 16, 13, in denen der Hinterdruck anliegt. Die Wirkungsrichtung der auf den Ventilkegel 7 wirkenden Druckkräfte ist jedoch in den beiden Räumen 16, 13 entgegengesetzt, so dass sie sich öffnend und schließend wirkende Druckkräfte gegenseitig ganz oder teilweise aufheben. Da im Ausführungsbeispiel der Kolbendurchmesser im Bereich der Dichtfläche 17 geringfügig kleiner ist als die wirksame Durchmesser im Bereich des Ventilsitzes 9 ergibt sich ein geringfügiger Überschuss des Hinterdrucks in öffnender Richtung.

Gleichermaßen heben sich die öffnenden und schließenden Wirkungen des Vordrucks auf. Der Vordruck wirkt auf den Ventilsitz 9 in schließender Richtung, und auf die obere Dichteinheit 17 in öffnender Richtung entgegen der Kraft der Schließfed er 8.

Dadurch gelingt es, die Abhängigkeit des Hinterdrucks zu m Vordruck zu beseitigen oder zumindest deutlich zu vermindern. Der sich im Gas-Abflussraum 13 einstellende Hinterdruck hängt nur von den (konstanten) Stellkräften und der wirksamen Kolbenfläche ab. Im Idealfall ist die Vordruckabhäng igkeit des Hinterdrucks vollkommen beseitigt.

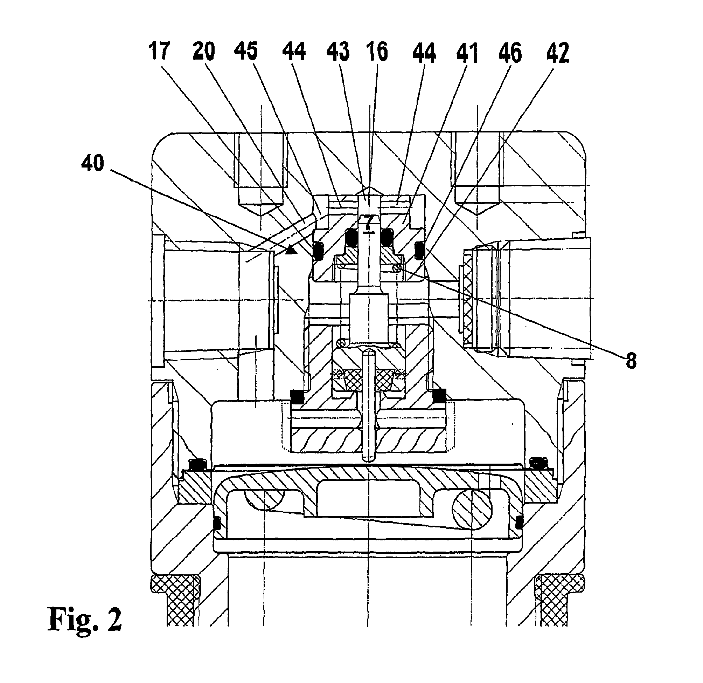

**Figur 2** zeigt eine weitere Ausführungsform des erfindungsgemäßen Druckminderers mit einem Hochdruckregeleinsatz in Form eines Einsatzteils 40 aus Messing, das in eine r zylinderförmigen Aufnahme der Verschlussschraube 23 auswechselbar eingesetzt ist.

Sofern in Figur 2 dieselben Bezugsziffern wie in Figur 1 verwendet sind, so sind damit baug leiche oder äquivalente Bauteile und Bestandteile bezeichnet, wie sie oben anhand der Beschreibung der ersten Ausführungsform des erfindungsgemäßen Druckminderers näher erläutert sind.

Das Einsatzteil 40 ist im Wesentlichen als rotationssymmetrisches Bauteil mit stufenförmiges Außenkontur ausgebildet, wobei der obere Bereich 41 einen kleineren Außendurchmesser aufweist als der untere Bereich 42. Dessen Außendurchmesser ist an den Innendurchmesser der Aufnahme angepasst.

Das Einsatzteil 40 ist mit einer zentralen Durchgangsbohrung 43 versehen, in die das obere Ende des Ventilkegels 7 unter Freilassung des Druckausgleichsraums 16 abgedichtet hineinragt. Außerdem ist durch die Seitenwandung des Einsatzteils 40 eine Querbohrung 44 geführt, die einerseits im Druckausgleichsraum 16 und andere rseits in einem Ringspalt 45 mündet, der infolge des kleineren Außendurchmessers des oberen Einsatzteil-Bereichs 41 zwischen diesem und der Innenwandung der Aufnahme entsteht. Die Funktion der Querbohrung 44 entspricht derjenigen der zweiten Druckausgleichsbohrung 22 in der in Figur 1 gezeigten Vorrichtung. In den Ringspalt 45 mündet die Druckausgleichsleitung 20. In seinem unteren Bereich 42 weist das Einsatzteil 40 eine Ring nut auf, in die ein Dichtring 46 eingelegt ist, mittels dem der Ringspalt 45 nach Außen abgedichtet ist.

Das Einsatzteil stellt insoweit einige wesentliche Funktionen für den erfindungsgemäßen Druckminderer mit Vor- und Hinterdruckausgleich bereit, wobei es für eine Vielzahl unterschiedlicher Typen von Druckminderern ausgelegt ist, insbesondere auch für Druckminderer in Membranbauweise.

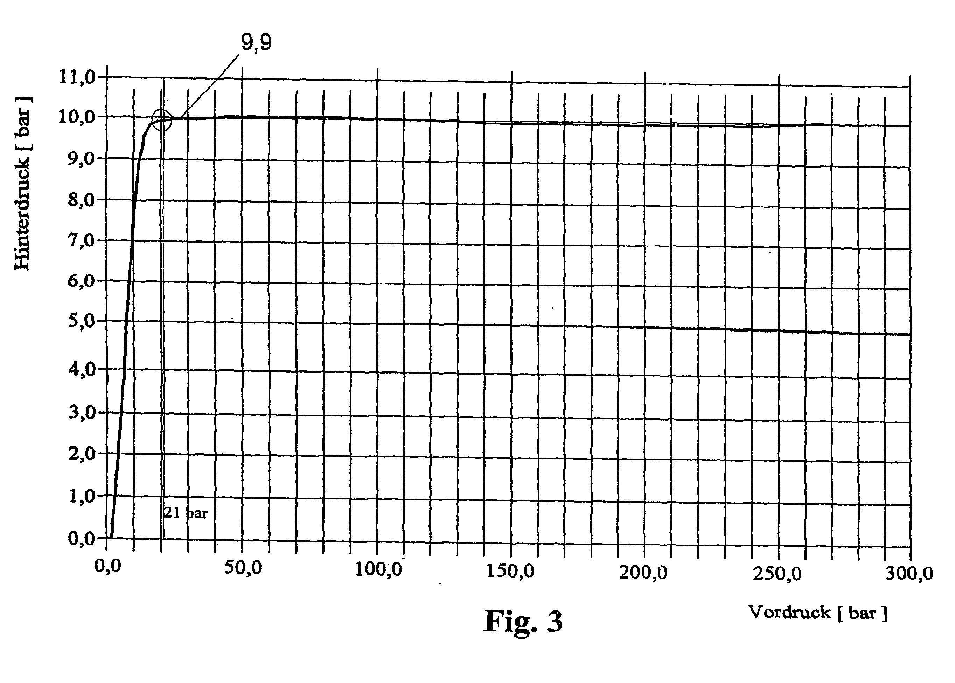

Der in Figur 1 dargestellte erfindungsgemäße Druckminderer 1 - und ebenso die in Figur 2 gezeigte Abwandlung - zeichnet sich durch sehr gute Druckregeleigenschaften aus, wie die Druckkennlinie der Entspannungskurve von Figur 3 zeigt.

Im Diagramm von Figur 3 ist der Hinterdruck (in bar) auf der y-Achse in Abhängigkeit vom Vordruck (in bar) auf der x-Achse aufgetragen. Die Ermittlung der Entspannungskurve folgt anhand des in der DIN EN ISO 2503 (1998) angegebenen Messverfahrens. Der Hinterdruck wird mittels des erfindungsgemäßen Druckminderers 1 auf einen Sollwert von 10 bar eingestellt; als Prüfgas wird Stickstoff verwendet, wobei die Gasentnahme bei 20 m$^3$/h liegt.

Es zeigt sich, dass der Hinterdruck beginnend von einem anfänglichen Fülldruck der Druckgasflasche von 270 bar während der Gasentnahme exakt auf 10 bar geregelt werden kann. Bei einem Vordruck von 21 bar ergibt sich ein Druckabfall auf lediglich 9,9 bar. Daraus ergibt sich für den Druckabfall bei 21 bar bezogen auf den Solldruck ein Quotient von -0,01 (= 1 %), was für einen einstufigen Druckminderer ein hervorragender Wert ist (gefordert in der ISO 2503 ist eine Hinterdruckabweichung von ≤ 30 %).

Typischerweise ergibt sich bei einem einstufigen Kolbenregler mit steigender Charakteristik nach dem Stand der Technik bei einem Restdruck von 21 bar ein Hinterdruck von 11,5 bar, und damit ein Verhältnis der Druckabweichung zum Solldruck von 0,15, also 15%.

Der erfindungsgemäße Kolben-Druckminderer 1 ist wegen seiner geringen Bauhöhe und seiner guten Regeleigenschaften besonders geeignet für den Einsatz in einer Entspannungsstation mit einer Gaswege-Umschalteinrichtung, wie zum Beispiel in der DE 43 34 243 A1 beschrieben ist. Mittels der Entspannungsstation wird die Gasentnahme vor der vollständigen Entleerung des einen Druckbehälters mediengesteuert auf einen anderen, noch gefüllten Druckbehälter, umgeschaltet.

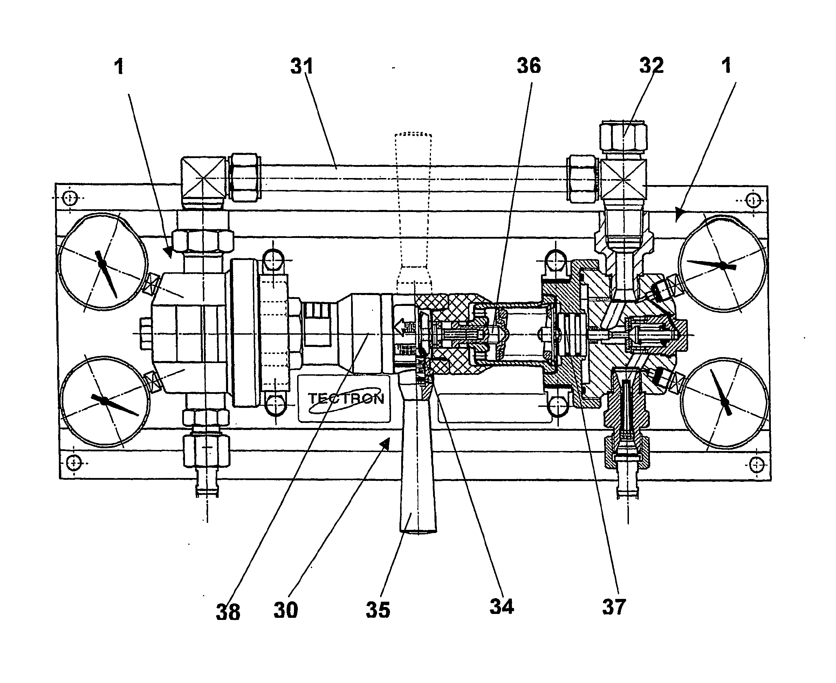

**Figur 4** zeigt eine Ausführungsform der erfindungsgemäßen Entspannungseinrichtung in einer Schnittdarstellung. Diese ist mit zwei Druckminderern 1 in Form von Kolbenreglern gemäß der vorliegenden Erfindung ausgestattet. Diese sind über die Gaswege-Umschalteinrichtung 30 miteinander verbunden. Die Vordruckseiten der Druckminderer 1 sind über (in der Figur 4 nicht dargestellte Armaturen) mit Druckgasquellen angeschlossen, währe nd die Gas-Auslassräume über eine Leitung 31 miteinander verbunden sind und von der eine Abzweigleitung 32 zu einem führt.

Die Gaswege-Umschalteinrichtung 30 besteht im Wesentlichen aus einem Umschalthebel 35 der über ein Kegelradgetriebe 34 in Wirkverbindung steht. Das Kegelradgetriebe 34 wirkt über eine Spindel 36 auf die Stellfeder 37 des jeweiligen Druckminderers 1 ein, wodurch der Hinterdruck einstellbar ist. Der Hebel 35 hat - bezogen auf die Hebel-Drehachse 38, die koaxial zur Längsachse der Spindeln 36 verläuft - eine Länge von 90 mm aufweist.

Zum einen ermöglichen die erfindungsgemäßen Druckminderer 1 eine weitgehende Entleerung des einen Druckgasbehälter ohne merkliche Änderung des Hinterdrucks. Zum anderen kann die mit dem Ventilkegel 7 zusammenwirkende Stellfeder 37 infolge der kleinen Kolbenstirnfläche entsprechend klein und mit niedriger Federkonstante ausgelegt werden, was das Umlegen des Umschalthebels 35 erleichtert.

Durch vollständiges Umlegen des Umschalthebels 35 auf die eine oder andere Seite (wie in Figur 4 durch punktierte Linien dargestellt) wird die jeweilige Spindel 36 vollständig nach links oder rechts verfahren und dadurch die eine oder der andere Stellfeder 37 entlastet und der jeweilige Druckminderer 1 geschlossen.

**Patentansprüche**

1. Druckbalanciertes Regelventil in Form eines mit dem Vordruck schließenden Kolbenreglers (1), umfassend ein Gehäuse (2) mit einem Ventilsitz (9) für einen Ventilkegel (7), der zwischen einer Geschlossenstellung bei Anlage auf dem Ventilsitz (9) und einer mit dem Hinterdruck und gegen die Kraft einer Stellfeder (8) erreichbaren Offenstellung in axialer Richtung verschiebbar gelagert ist, mit einem vor dem Ventilsitz (9) vorgesehenen Gas-Zuflussraum (12), der mit einer Druckgasquelle verbunden ist und der in Geschlossenstellung mittels dem auf dem Ventilsitz (9) anliegenden Ventilkegel (7) von einem Gas-Abflussraum (13) hinter dem Ventilsitz (9) getrennt ist, und mit einem über eine Druckausgleichsleitung (19, 20, 21, 22) mit dem Gas-Abflussraum (13) fluidisch verbundenen, abgedichteten Druckausgleichsraum (16), in den sich der Ventilkegel (7) mit einem Ende erstreckt, auf das der Hinterdruck in Schließrichtung einwirkt, wobei sich das auf den Ventilkolben einwirkende, untere Ende des Ventilkegels (7) in eine Druckausgleichskammer (27) erstreckt, die über einen Druckausgleichskanal (28) mit dem Gas-Abflussraum (13) verbunden ist.

2. Regelventil nach Anspruch 1, **dadurch gekennzeichnet, dass** das Gehäuse einen Grundkörper (2) mit einer Durchgangsbohrung und eine mit dem Grundkörper (2) verbundene und mit einer Aufnahme für die Stellfeder (8) versehene Verschlussschraube (23) umfasst, die in die Durchgangsbohrung eingesetzt und um deren Mittelachse (11) drehbar gelagert ist, und in welcher der Druckausgleichsraum (16) ausgebildet ist.

3. Regelventil nach Anspruch 2, **dadurch gekennzeichnet, dass** die Druckausgleichsleitung (19, 20, 21, 22) einen um die Verschlussschraube (23) umlaufenden Ringraum (21) umfasst, in den ein mit dem Gas-Abflussraum (13) verbundener erster Druckkanal (19, 20) und ein mit dem Druckausgleichsraum (16) verbundener zweiter Druckkanal (22) münden.

4. Regelventil nach Anspruch 3, **dadurch gekennzeichnet, dass** der Ringraum (21) im Grundkörper (2) ausgebildet ist.

5. Regelventil nach Anspruch 3, **dadurch gekennzeichnet, dass** der Ringraum in der Verschlussschraube ausgebildet ist.

6. Regelventil nach einem der Ansprüche 3 bis 5, **dadurch gekennzeichnet, dass** zwischen der Innenwandung der Durchgangsbohrung und der Verschlussschraube (23) eine obere Dichteinheit (33) und eine untere Dichteinheit (32) vorgesehen sind, und dass der Ringraum (21) zwischen der oberen Dichteinheit (33) und der unteren Dichteinheit (32) verläuft.

7. Regelventil nach Anspruch 6, **dadurch gekennzeichnet, dass** die obere Dichteinheit (33) und die untere Dichteinheit (32) jeweils als Dichtringe ausbildet sind, die in Ringnuten der Verschlussschraube (23) eingelassen sind.

8. Regelventil nach einem der vorhergehenden Ansprüche, **dadurch gekennzeichnet, dass** die Abdichtung des Druckausgleichsraums (16) einen Dichtring (17) umfasst, der am Ventilkegel (7) in einem Dichtungsbereich dichtend anliegt, wobei der Ventilkegel (7) in dem Dichtungsbereich einen Abdichtdurchmesser aufweist, der vom Durchmesser des Ventilsitzes (9) um maximal 15 % abweicht.

9. Regelventil nach einem der vorhergehenden Ansprüche, **dadurch gekennzeichnet, dass** der Druckausgleichsraum (16) in einem in ein Ventilgehäuse austauschbar eingesetzten Hochdruckregeleinsatz (40) ausgebildet ist.

10. Regelventil nach Anspruch 9, **dadurch gekennzeichnet, dass** der Hochdruckregeleinsatz (40) auch für ein druckbalanciertes Regelventil in Form eines mit dem Vordruck schließenden Membranreglers einsetzbar ist.

11. Regelventil nach Anspruch 1, **dadurch gekennzeichnet, dass** das untere Ende des Ventilkegels (7) in einer Gleitbuchse (26) geführt wird.

**12.** Entspannungsstation mit einem Gaswege-Umschalter, ausgestattet mit einem Regelventil, das mit einem gegen die Federkraft einer Stellfeder bedienbaren Hebel für die Umschaltung einer Gasversorgung von einer Druckgasquelle auf eine andere Druckgasquelle versehen ist, **dadurch gekennzeichnet, dass** als Regelventil ein Kolbenregler nach einem der Ansprüche 1 bis 11 eingesetzt wird.

**Claims**

**1.** A pressure-balanced regulating valve in the form of a piston regulator (1) closing with the admission pressure, comprising a housing (2) with a valve seat (9) for a valve cone (7) which is displaceably supported in axial direction between a closed position while abutting on the valve seat (9) and an open position which can be achieved with the back pressure and against the force of an adjusting spring (8), with a gas inflow chamber (12) which is provided in front of the valve seat (9) and is connected to a compressed gas source and which in the closed position is separated by means of the valve cone (7) abutting on the valve seat (9) from a gas outflow chamber (13) behind the valve seat (9), and with a sealed pressure-compensating chamber (16) which is fluidically connected via a pressure compensating line (19, 20, 21, 22) to the gas outflow chamber (13) and into which the valve cone (7) extends with an end on which the back pressure is acting in closing direction, the lower end of the valve cone (7) which is acting on the valve piston extending into a pressure compensating chamber (27) which is connected via a pressure compensating channel (28) to the gas outflow chamber (13).

**2.** The regulating valve according to claim 1, **characterized in that** the housing comprises a basic body (2) with a through hole and a screw plug (23) which is connected to the basic body (2) and provided with an accommodating means for the adjusting spring (8) and which is inserted into the through hole and rotatably supported about the middle axis (11) thereof and in which the pressure compensating chamber (16) is formed.

**3.** The regulating valve according to claim 2, **characterized in that** the pressure compensating line (19, 20, 21, 22) comprises an annular chamber (21) surrounding the screw plug (23) and in which a first pressure channel (19, 20) connected to the gas outflow chamber (13) terminates and also a second pressure channel (22) connected to the pressure compensating chamber (16).

**4.** The regulating valve according to claim 3, **characterized in that** the annular chamber (21) is formed in the basic body (2).

**5.** The regulating valve according to claim 3, **characterized in that** the annular chamber is formed in the screw plug.

**6.** The regulating valve according to any one of claims 3 to 5, **characterized in that** an upper sealing unit (33) and a lower sealing unit (32) are provided between the inner wall of the through hole and the screw plug (23), and that the annular chamber (21) extends between the upper sealing unit (33) and the lower sealing unit (32).

**7.** The regulating valve according to claim 6, **characterized in that** the upper sealing unit (33) and the lower sealing unit (32) are each formed as sealing rings which are embedded in annular grooves of the screw plug (23).

**8.** The regulating valve according to any one of the preceding claims, **characterized in that** the sealing of the pressure compensating chamber (13) comprises a sealing ring (17) which sealingly abuts on the valve cone (7) in a sealing area, the valve cone (7) in the sealing area having a sealing diameter that differs from the diameter of the valve seat (9) by not more than 15%.

**9.** The regulating valve according to any one of the preceding claims, **characterized in that** the pressure compensating chamber (16) is formed in a high-pressure regulating insert (40) which is exchangeably inserted into a valve housing.

**10.** The regulating valve according to claim 9, **characterized in that** the high-pressure regulating insert (40) is also useable for a pressure-balanced regulating valve in the form of a diaphragm regulator closing with the admission pressure.

**11.** The regulating valve according to claim 1, **characterized in that** the lower end of the valve cone (7) is guided in a slide bush (26).

**12.** A pressure relief station with a gas-path switching device, equipped with a regulating valve that is provided with a lever operable against the spring force of an adjusting spring for switching over a gas supply from one compressed gas source to another compressed gas source, **characterized in that** a piston regulator according to any one of claims 1 to 11 is used as the regulating valve.

**Revendications**

1. Soupape de régulation équilibrée en pression sous forme d'un régulateur à piston (1) se fermant avec une prépression comprenant un carter (2) avec un siège de soupape (9) pour un cône de soupape (7) qui est logé coulissant entre une position fermée quand il est appliqué sur le siège de soupape (9) et une position d'ouverture pouvant être atteinte avec la pression arrière et contre la force d'un ressort de réglage (8) dans la direction axiale, avec une chambre d'amenée de gaz (12) prévue devant le siège de soupape (9), chambre qui est reliée à une source de gaz comprimé et qui est séparée dans la position fermée au moyen du cône de soupape (7) appliqué sur le siège de soupape (9) d'une chambre d'évacuation de gaz (13) derrière le siège de soupape (9) et avec une chambre de compensation de pression étanche, reliée en fluide à la chambre d'évacuation de liquide (13) par une conduite de compensation de pression (19, 20, 21, 22), chambre de compensation de pression dans lequel s'étend avec une extrémité le cône de soupape, extrémité sur laquelle la pression arrière agit dans la direction de fermeture, l'extrémité inférieure du cône de soupape (7) s'étendant dans une chambre de compensation de pression (27) qui est reliée par un canal de compensation de pression (28) à la chambre d'évacuation de gaz (13).

2. Soupape de régulation selon la revendication 1, **caractérisée en ce que** le carter comprend un corps de base (2) avec un perçage de passage et une vis de fermeture (23) reliée au corps de base (2) et munie d'un logement pour le ressort de rappel (8), vis qui est insérée dans le perçage de passage et est logé rotative autour de son axe médian (11) et dans lequel est formée la chambre de compensation de pression (16).

3. Soupape de régulation selon la revendication 2, **caractérisée en ce que** la conduite de compensation de pression (19, 20, 21, 22) comprend une chambre annulaire (21) entourant la vis de fermeture (23), chambre dans laquelle débouchent un premier canal de pression (19, 20) relié à la chambre d'évacuation de gaz (13) et un second canal (22) relié à la chambre de compensation de pression (16).

4. Soupape de régulation selon la revendication 2, **caractérisée en ce que** la chambre annulaire (21) est réalisée dans le corps de base (2).

5. Soupape de régulation selon la revendication 3, **caractérisée en ce que** la chambre annulaire est réalisée dans la vis de fermeture.

6. Soupape de régulation selon l'une des revendications 3 à 5, **caractérisée en ce qu'**il est prévu entre la paroi interne du perçage de passage et de la vis de fermeture (23) une unité d'étanchéité supérieure (33) et une unité d'étanchéité inférieure (32) et **en ce que** la chambre annulaire (21) s'étend entre l'unité d'étanchéité supérieure (33) et l'unité d'étanchéité inférieure (32).

7. Soupape de régulation selon la revendication 6, **caractérisée en ce que** l'unité d'étanchéité supérieure (33) et l'unité d'étanchéité inférieure (32) sont réalisées respectivement comme des bagues d'étanchéité qui sont incorporées dans des rainures annulaires de la vis de fermeture (23).

8. Soupape de régulation selon l'une des revendications précédentes, **caractérisée en ce que** l'étanchéité de la chambre de compensation de pression (16) comprend une bague annulaire (17) qui s'applique de manière étanche contre le cône de soupape (7) dans une zone d'étanchéité, le cône de soupape (7) présentant dans la zone d'étanchéité un diamètre d'étanchéité qui diffère du diamètre du siège de soupape (9) de 15 % maximum.

9. Soupape de régulation selon l'une des revendications précédentes, **caractérisé en ce que** la chambre de compensation de pression (16) est réalisée dans un insert de régulation de haute pression (40) incorporé dans un carter de soupape de manière échangeable.

10. Soupape de régulation selon la revendication 9, **caractérisée en ce que** l'insert de régulation de haute pression (40) peut être utilisé également sous forme d'un régulateur à membrane se fermant avec la prépression pour une soupape de régulation équilibrée en pression.

**11.** Soupape de régulation selon la revendication 1, **caractérisée en ce que** l'extrémité du cône de soupape (7) est guidée dans une douille de glissement (26).

**12.** Station de détente pourvue d'un dispositif de changement de gaz, muni d'une soupape de régulation qui est munie d'un levier actionnable contre la force ressort d'un ressort de retour pour le changement d'une alimentation de gaz d'une source de gaz comprimé à une autre gaz de source comprimé, **caractérisée en ce qu'**on utilise en tant que soupape de régulation un régulateur à piston selon l'une des revendications 1 à 11.

**Fig. 1**

EP 1 802 904 B1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19852471
- DE 29823995 U1
- DE 4438462 C1
- EP 1184617 A
- DE 4334243 A1